# EUROPEAN PATENT SPECIFICATION

(11) **EP 4 295 678 B1**
(45) Date of publication and mention of the grant of the patent: **28.08.2024**
(21) Application number: 22207244.9
(22) Date of filing: 14.11.2022
(51) Int. Cl.: A01K 63/00, A01K 63/04

(54) **DEVICE FOR MONITORING SWIMMING CAPABILITY OF FISH**
VORRICHTUNG ZUR ÜBERWACHUNG DER SCHWIMMFÄHIGKEIT VON FISCHEN
DISPOSITIF DE SURVEILLANCE DE LA CAPACITÉ DE NAGE DE POISSONS

(30) Priority: 21.06.2022 CN 202210701483
(43) Date of publication of application: 27.12.2023
(73) Proprietor: China Three Gorges Co., Ltd., Wuhan Hubei 430010 (CN); China Three Gorges University, Yichang City, Hubei 443002 (CN)
(72) Inventor: DAI, Huichao, Wuhan, 430010 (CN); TAN, Junjun, Wuhan, 430010 (CN); ZHENG, Tiegang, Wuhan, 430010 (CN); SHI, Xiaotao, Wuhan, 430010 (CN); JIANG, Dingguo, Wuhan, 430010 (CN); YANG, Chao, Wuhan, 430010 (CN); WANG, Yuanyang, Wuhan, 430010 (CN)
(74) Representative: J A Kemp LLP

(56) References cited:
- CN-A- 106 818 551
- CN-A- 107 646 761
- CN-A- 108 040 961
- US-A1- 2021 368 749

## Description

### TECHNICAL FIELD

The invention relates to the technical field of equipment for monitoring swimming capability of fish, in particular to a device for monitoring swimming capability of fish.

### BACKGROUND

A fish passage facility is an effective engineering measure for assisting fish in passing water-passing obstacles smoothly and recovering river connectivity, while the swimming capability of fish is an important reference for designing the fish passage facility.

An existing fish swimming capability test is performed in a closed annular water tank with uniform flow, where the flow rate of water flow in the water tank is determined by the rotating speed of a variable frequency motor. During testing, fish is placed in a testing region, the swimming capability of the fish under different water environment conditions is tested by adjusting the flow rate of water flow in the testing region, and testing personnel observes the state of the experimental fish at every moment to judge whether the test is ended or not; and if the swimming capability of different fishes needs to be detected, first fish is detected first and then taken out after detection, and then the next fish is placed into the testing region for testing the swimming capability. Adjustment of the water environment conditions and taking and placing of the fish result in low efficiency of the entire testing process.

Document CN107646761A discloses a fish swimming capability test device comprising a large water tank provided with a small water tank made of organic glass walls and insertion plates, wherein the insertion plates are movable up and down along a sliding guide rail. The device further comprises swimming tubes arranged through the small tank for observation of experimental fish swimming behaviour. Propellers 8 are provided at one end of the swimming tubes and a "W" shaped water deflector is provided at their other end for circulation of water in the swimming tubes and outside the small water tank.

### SUMMARY

Accordingly, the technical problem to be solved by the present invention is to overcome the defect of low testing efficiency of a device for testing swimming capability of fish in the prior art so as to provide a device for monitoring swimming capability of fish.

The device for monitoring swimming capability of fish provided by the present invention, according to independent claim 1, includes:
a monitoring shell, including a monitoring barrel and a plurality of partition plates, wherein an opening of the monitoring barrel is upward, the plurality of partition plates are all located in the monitoring barrel and evenly distributed in a circumferential direction of the monitoring barrel, the partition plates are strip-shaped plates, one end of each of the strip-shaped plates is connected to an inner wall of the monitoring barrel in a sealed manner, the other end of each of the strip-shaped plates is connected to one another at a center of the monitoring barrel in a sealed manner, and the plurality of partition plates divide an inner cavity of the monitoring barrel into a plurality of monitoring cavities evenly distributed in the circumferential direction;
a plurality of measuring channels, corresponding to the monitoring cavities in a one-to-one manner, wherein the measuring channels are placed in the corresponding monitoring cavities during measuring, one end face of each of the measuring channels is provided with water outlet holes, testing spaces suitable for target fish activities are formed in the measuring channels, and the measuring channels are of transparent structures or cage structures, so that fish swimming states inside the measuring channels are able to be observed from outside during monitoring;
a plurality of circulating pump assemblies, corresponding to the measuring channels in a one-to-one manner and each communicating with the other end face of each of the corresponding measuring channels during measuring, wherein the circulating pump assemblies are configured to form streams in an extending direction of each of the measuring channels; and
a driving assembly, connected with each measuring channel and configured to move all the measuring channels into respective adjacent monitoring cavities synchronously; wherein
the driving assembly includes:
   a rotation driving member, mounted at the center of the monitoring barrel, wherein a rotating shaft of the rotation driving member extends out of upper sides of the partition plates and is perpendicular to a bottom of the monitoring barrel;
   a plurality of connecting rods, corresponding to the plurality of measuring channels in a one-to-one manner, wherein one end of each of the connecting rods is fixedly connected to one of the measuring channels, and the other end of each of the connecting rods is hinged to the rotating shaft and is able to rotate in a vertical plane; and
   a lifting barrel, fixed at the center of the monitoring barrel and coaxial with the rotating shaft, wherein an upper end face of the lifting barrel is configured as a wavy curved surface, valleys of the wavy curved surface correspond to the plurality of measuring channels in a one-to-one manner, the connecting rods rest on the wavy curved surface, and the wavy curved surface is configured to guide the measuring channels to move into the respective adjacent monitoring cavities when the rotating shaft rotates.

Optionally, the connecting rods are Z-shaped rods, each Z-shaped rod includes a first rod, a second rod and a third rod perpendicularly connected to one another in sequence, each of the first rods rests on the wavy curved surface and has one end hinged to the rotating shaft, and one end of each of the third rods is fixedly connected to an end face, which is close to the center of the monitoring barrel, of one of the measuring channels.

Optionally, an outlet is formed in a lower portion of one end, which is close to the corresponding connecting rod, of each measuring channel, the outlet is configured for fish in the measuring channel to swim out, a door body is mounted on the outlet, and the door body is provided with drain holes.

Optionally, each of the measuring channels includes:
a fixed barrel, with one end fixedly connected to the driving assembly; and
a movable barrel, disposed coaxially with the fixed barrel and having one end telescopically connected to the other end of the fixed barrel by plug pin structures, wherein the plug pin structures include a plurality of groups evenly distributed in a circumferential direction of the movable barrel, and each interval between adjacent groups of plug pin structures is able to block fish from swimming out of the measuring channel.

Optionally, a plurality of linear driving members are evenly distributed on a wall of the monitoring barrel in the circumferential direction, the linear driving members correspond to the monitoring cavities in a one-to-one manner, a mounting plate is fixed to one end of a movable rod of each of the linear driving members, each of the circulating pump assemblies includes a pump body and a water outlet pipe, the pump body is fixed to the mounting plate and has a water inlet communicating with the corresponding monitoring cavity, the water outlet pipe communicates with a water outlet of the pump body, a first through hole is formed in an end face of the measuring channel close to the wall of the monitoring barrel, and the water outlet pipe has a first position where the water outlet pipe is inserted into the first through hole to spray water to the inside of the measuring channel and a second position where the water outlet pipe is separated from the first through hole to avoid a movement path of the measuring channel.

Optionally, a fish baiting structure is further fixed to each of the mounting plates, the fish baiting structure is disposed on the mounting plate in a protruding manner towards a direction away from the corresponding linear driving member, a second through hole is formed in the end face of the measuring channel close to the wall of the monitoring barrel, the fish baiting structure has a first position where the fish baiting structure is inserted into the second through hole and a second position where the fish baiting structure is separated from the second through hole to avoid a movement path of the measuring channel, and the first position of the fish baiting structure and the first position of the water outlet pipe are synchronously realized by action of the linear driving member.

Optionally, a first magnetic portion is further fixed to each of the mounting plates, a second magnetic portion is fixed to the end face of the measuring channel close to the wall of the monitoring barrel, the first magnetic portion has a first position where the first magnetic portion is attracted onto the second magnetic portion during monitoring and a second position where the first magnetic portion is separated from the second magnetic portion, and the first position of the first magnetic portion and the first position of the water outlet pipe are synchronously realized by action of the linear driving member.

Optionally, a fish expelling structure is disposed at one end of the measuring channel provided with the water outlet holes, the fish expelling structure includes a floating plate, a moving rod and a flexible mat, an upper edge part of the flexible mat is fixed to an inner wall of the measuring channel, the moving rod is slidably inserted into an upper barrel wall of the measuring channel, a lower end of the moving rod is fixedly connected to a lower edge part of the flexible mat, and an upper end of the moving rod extends out of the measuring channel and is fixedly connected to the floating plate.

Optionally, the device for monitoring swimming capability of fish further includes:
a plurality of turbulence flow generating mechanisms, corresponding to the monitoring cavities in a one-to-one manner and mounted in the monitoring cavities.

The technical solution of the present invention has the following advantages:
1. According to the device for monitoring swimming capability of fish provided by the present disclosure, the plurality of monitoring cavities are formed in the monitoring shell, each of the monitoring cavities is configured with one measuring channel inside, each of the measuring channels is configured with one circulating pump assembly, and a plurality of different water environment conditions can be formed by controlling the flow rate in the measuring channels by the circulating pump assemblies, so that the swimming capability of the same species of fish under multiple different environments can be measured at the same time, there is no need to adjust the flow rate, and the monitoring efficiency is higher; and besides, the driving assembly is disposed, all the measuring channels can be moved into the respective adjacent monitoring cavities synchronously, such that different species of fishes are placed in the different measuring channels, then by sequentially placing fish in the same measuring channel into the different monitoring cavities, the swimming capability of the fishes under multiple different environments can be monitored at the same time, the fishes do not need to be taken out, only the action of the driving assembly needs to be controlled, and the monitoring efficiency is higher. In addition, adjacent two of the measuring channels can be placed into the same monitoring cavity in sequence by the driving assembly, and then the swimming capability of the different species of fishes can be visually compared, so that two species of fishes requiring comparison can be placed in the adjacent measuring channels, which is more conductive to horizontal comparison of the swimming capability of different fishes.
2. According to the device for monitoring swimming capability of fish provided by the present disclosure, the driving assembly includes the rotation driving member, the connecting rods and the lifting barrel, the measuring channels are controlled by the rotation driving member to rotate in the circumferential direction of the monitoring barrel, the lifting barrel is configured to avoid interference between the measuring channels and the partition plates during movement of the measuring channels, the structure is simple, operation is convenient, and the stability of all the measuring channels during operation can be guaranteed.
3. According to the device for monitoring swimming capability of fish provided by the present disclosure, the outlet is formed in one end, which is close to the corresponding connecting rod, of each measuring channel, the door body is mounted on the outlet, and the door body is provided with the drain holes. When the connecting rods are located at peaks of the wavy curved surface, the end, which is close to the corresponding connecting rod, of each measuring channel is lower than the other end, water will gather at the end close to the corresponding connecting rod and be discharged through the drain holes, at the moment, the door body is opened, then a net bag is placed under the outlet, fish will enter the net bag through the outlet, and the fish is taken out. The operation is convenient, and the fish taking efficiency is improved.
4. According to the device for monitoring swimming capability of fish provided by the present disclosure, each of the measuring channels includes the fixed barrel and the movable barrel, the movable barrel can be driven to move relative to the fixed barrel, and thus the measuring channels with different testing distances are formed to meet the requirements for monitoring the swimming capability of fishes different in body length and species.
5. According to the device for monitoring swimming capability of fish provided by the present disclosure, the circulating pump assemblies are mounted on the wall of the monitoring barrel through the linear driving members, and compared with the solution of directly mounting the circulating pump assemblies on the measuring channels, the weight of the measuring channels is lowered, a transmission load of the driving assembly is reduced, and the driving assembly is smoother in operation.
6. According to the device for monitoring swimming capability of fish provided by the present disclosure, the fish baiting structures are disposed and can induce fish to swim towards the positions of the fish baiting structures, so that the monitoring efficiency is further improved.
7. According to the device for monitoring swimming capability of fish provided by the present disclosure, the first magnetic portion is arranged on each of the mounting plates, the second magnetic portion is arranged on the end face of each of the measuring channels close to the wall of the monitoring barrel, during monitoring, the first magnetic portion and the second magnetic portion are attracted to make the measuring channel firmer, and interference on monitoring caused by external factors such as shaking of the measuring channel is avoided.
8. According to the device for monitoring swimming capability of fish provided by the present disclosure, the fish expelling structures are disposed, when the measuring channels enter the monitoring cavities, the floating plates are subjected to buoyancy and drive the flexible mats to wrinkle by the moving rods, and thus fish is expelled to swim towards the side opposite to the water outlet holes, and the monitoring efficiency is further improved.
9. According to the device for monitoring swimming capability of fish provided by the present disclosure, the turbulence flow generating mechanisms are further arranged in the monitoring cavities, the turbulence flow performance, such as turbulence energy and a turbulence dissipation rate, in the corresponding monitoring cavities can be changed, and thus the swimming capability of fish under different turbulence flow performance can be monitored.

### BRIEF DESCRIPTION OF THE DRAWINGS

In order to explain the specific implementations of the present disclosure or the technical solution in the prior art more clearly, the accompanying drawings required to be used in the description of the specific implementations or the prior art will be briefly introduced below. Apparently, the accompanying drawings in the following description are some implementations of the present disclosure, and for those of ordinary skill in the art, other accompanying drawings may also be obtained from these accompanying drawings without creative labor.
Fig. 1 is a schematic diagram of an entire structure of a device for monitoring swimming capability of fish in embodiments of the present invention.
Fig. 2 is a schematic diagram of an assembling structure of a driving assembly and measuring channels in embodiments of the present invention.
Fig. 3 is a partial enlarged diagram at the position A in Fig. 2.
Fig. 4 is a schematic diagram of measuring channels and attachment structures in embodiments of the present invention.
Fig. 5 is a schematic diagram of a fish expelling structure in embodiments of the present invention.

### Description of reference numerals:

1, monitoring shell; 11, monitoring barrel; 12, partition plate; 2, measuring channel; 21, fixed barrel; 211, water outlet holes; 212, outlet; 213, door body; 22, movable barrel; 221, first through hole; 222, second through hole; 223, second magnetic portion; 3, circulating pump assembly; 31, pump body; 32, water outlet pipe; 4, driving assembly; 41, rotation driving member; 42, connecting rod; 43, lifting barrel; 5, linear driving member; 6, mounting plate; 61, fish baiting structure; 62, first magnetic portion; 7, fish expelling structure; 71, floating plate; 72, moving rod; 73, flexible mat; and 8, turbulence flow generating mechanism.

### DETAILED DESCRIPTION

The technical solutions of the present disclosure will be clearly and completely described below in combination with the accompanying drawings, wherein the described embodiments are a part of the present invention. All other embodiments obtained by those of ordinary skill in the art based on the embodiments in the present disclosure without creative work belong to the scope of protection of the present invention defined by the appended claims.

In the description of the present disclosure, it needs to be noted that directional or positional relations indicated by the terms "upper", "lower", "perpendicular", "horizontal" and the like are directional or positional relations shown based on the accompanying drawings, which are only for the convenience of describing the present disclosure and simplifying the description, rather than indicating or implying that the device or element referred to must have a specific orientation and be constructed and operated in a specific orientation, thus cannot be understood as a limitation of the present disclosure. In addition, the terms "first", "second" and "third" are only used for the purpose of description and cannot be understood as indicating or implying relative importance.

In addition, the technical features involved in different implementations of the present disclosure described below can be combined with one another as long as they do not conflict with one another.

### Embodiments

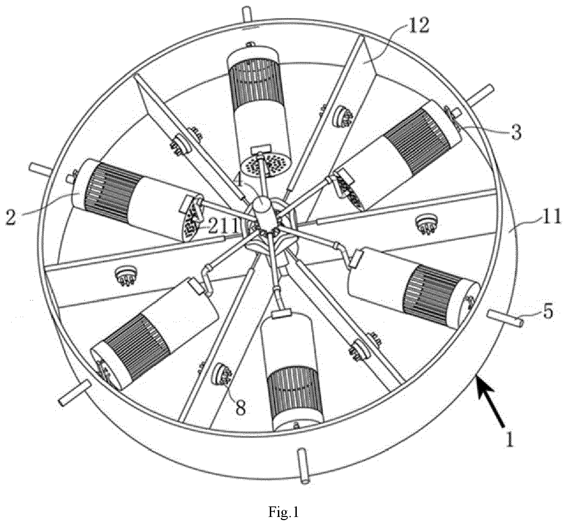

A specific implementation of a device for monitoring swimming capability of fish as shown in Fig. 1 includes:
a monitoring shell 1, including a monitoring barrel 11 and a plurality of partition plates 12, wherein an opening of the monitoring barrel 11 is upward, the plurality of partition plates 12 are all located in the monitoring barrel 11 and evenly distributed in a circumferential direction of the monitoring barrel 11, the partition plates 12 are strip-shaped plates, one end of each of the strip-shaped plates is connected to an inner wall of the monitoring barrel 11 in a sealed manner, the other end of each of the strip-shaped plates is connected to one another at a center of the monitoring barrel 11 in a sealed manner, and the plurality of partition plates 12 divide an inner cavity of the monitoring barrel 11 into a plurality of monitoring cavities evenly distributed in the circumferential direction;
a plurality of measuring channels 2, corresponding to the monitoring cavities in a one-to-one manner, wherein the measuring channels 2 are placed in the corresponding monitoring cavities during measuring, one end face of each of the measuring channels 2 is provided with water outlet holes 211, testing spaces suitable for target fish activities are formed in the measuring channels 2, and the measuring channels 2 are of transparent structures or cage structures, so that fish swimming states inside the measuring channels are able to be observed from outside during monitoring;
a plurality of circulating pump assemblies 3, corresponding to the measuring channels 2 in a one-to-one manner and each communicating with the other end face of each of the corresponding measuring channels 2 during measuring, wherein the circulating pump assemblies 3 are configured to form streams in an extending direction of each of the measuring channels 2; and
a driving assembly 4, connected with each measuring channel 2 and configured to move all the measuring channels 2 into respective adjacent monitoring cavities synchronously.

According to the device for monitoring swimming capability of fish, a plurality of different water environment conditions can be formed by controlling the flow rate in the measuring channels 2 by the circulating pump assemblies 3, so that the swimming capability of the same species of fish under multiple different environments can be measured at the same time, there is no need to adjust the flow rate, and the monitoring efficiency is higher; and besides, different species of fishes can be placed in the different measuring channels 2, then by sequentially placing fish in the same measuring channel 2 into the different monitoring cavities, the swimming capability of the fishes under multiple different environments can be monitored at the same time, the fishes do not need to be taken out, only the action of the driving assembly 4 needs to be controlled, and the monitoring efficiency is higher. In addition, adjacent two of the measuring channels 2 can be placed into the same monitoring cavity in sequence by the driving assembly 4, and then the swimming capability of the different species of fishes can be visually compared, so that two species of fishes requiring comparison can be placed in the adjacent measuring channels 2, which is more conductive to horizontal comparison of the swimming capability of different fishes.

It needs to be noted that the "barrel" above is a columnar shell structure with one end open and the other end closed.

A specific shape of the monitoring barrel 11 may be a cylinder shown in Fig. 1, or a polygonal barrel corresponding to a plurality of monitoring cavities, or a shape formed by replacing multiple edges of the polygonal barrel with a plurality of non-concyclic curves respectively.

An arrangement manner of the partition plates 12 in the monitoring barrel 11 may be as shown in Fig. 1. The plate surfaces of the partition plates 12 are perpendicular to the bottom of the monitoring barrel 11; alternatively, the partition plates 12 may be disposed slantly relative to the bottom of the monitoring barrel 11, but are evenly distributed in the circumferential direction of the monitoring barrel 11, so that it is guaranteed that the orientation of each of the partition plates 12 relative to the bottom of the monitoring barrel 11 is consistent; the partition plates 12 are to divide the inner cavities of the monitoring barrel 11 into the plurality of monitoring cavities, so that the partition plates 12 cannot be parallel to the bottom of the monitoring barrel; and apparently, the angles between the partition plates 12 and the bottom of the monitoring barrel cannot be too small, otherwise the formed monitoring cavities are too low, and the amount of stored water cannot meet the demands of fish swimming.

The number of the partition plates 12 may be 6 as in Fig. 1, or 8 or 4 or the like, but is at least two.

The sealed connection of the partition plates 12 on the inner wall of the monitoring barrel 11 may be in the manner of sealed adhesion, or the manner of sealing mats or the manner of welding or the like.

The other end of each of the strip-shaped plates is connected with one another at the center of the monitoring barrel 11 in the sealed manner, and specifically, following solutions may be adopted: the first is that the other ends of all the strip-shaped plates are directly converged at the center of the monitoring barrel 11 and are connected with one another in a sealed manner; and the second is that as shown in Fig. 1, a stand column is fixed to the center of the monitoring barrel 11, and the other ends of all the strip-shaped plates are connected to the stand column in a sealed manner. It needs to be noted that the strip-shaped plates may be disposed in the radial direction or disposed relatively deviated from the radial direction.

It is easy to understand that the measuring channels 2 are configured to provide spaces for fish swimming testing, so the measuring channels 2 need to be able to form a relatively closed space, the so-called closed refers to that fish cannot swim out of the space at will rather than isolation from the outside, so as to guarantee the feasibility of testing. Specifically, as shown in Fig. 1, each of the measuring channels 2 is composed of a cylinder and end plates at the two ends. Of course, a measuring channel 2 adopting a square tube and end plates at the two ends or other cross-sectional shapes is also applicable. In addition, the measuring channels 2 further need to be provided with access for placing in or taking out fish; and doors are configured at the access to guarantee that fish cannot swim out during testing.

It is easy to understand that the water outlet holes 211 are mainly disposed to provide outlets for streams so as to avoid the influence on the direction of the streams caused by returning of the streams. Specifically, at least one water outlet hole 211 is disposed, but in practical operations, in order to reduce returning of the streams as much as possible, a section may be configured as a hollowed-out shape as shown in Fig. 1, and each hole in the hollowed-out shape is one water outlet hole 211.

It needs to be understood that, in order to observe the swimming state of fish inside the measuring channels from the outside of the measuring channels 2, the measuring channels 2 need to be arranged into transparent structures or cage structures. Specifically, the measuring channels 2 may be of fully-transparent structures or partially-transparent structures; and the cage structures may be mouse cage structures or hollowed-out structures or the like.

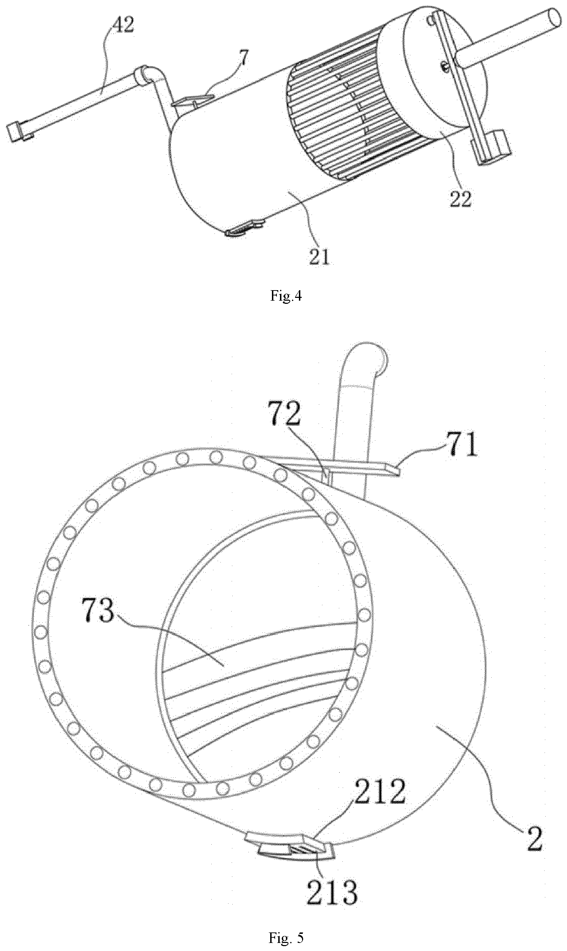

A preferred structure of each of the measuring channels 2 is provided herein, referring to Fig. 4, including:
a fixed barrel 21, with one end fixedly connected to the driving assembly 4; and
a movable barrel 22, disposed coaxially with the fixed barrel 21 and having one end telescopically connected to the other end of the fixed barrel 21 by plug pin structures, wherein the plug pin structures include a plurality of groups evenly distributed in a circumferential direction of the movable barrel 22, and each interval between adjacent groups of plug pin structures is able to block fish from swimming out of the measuring channel 2.

Each of the measuring channels 2 includes the fixed barrel 21 and the movable barrel 22, the movable barrel 22 can be driven to move relative to the fixed barrel 21, and thus the measuring channels 2 with different testing distances are formed to meet the requirements for monitoring the swimming capability of fishes different in body length and species.

The plug pin structures specifically include two solutions as follows: first, a plug pin is fixed to the end face of the fixed barrel 21, a plug hole is formed in the corresponding end face of the movable barrel 22, and the plug pin is inserted into the plug hole; and second, as shown in Fig. 4, a plug hole is formed in the end face of the fixed barrel 21, a plug pin is fixed to the corresponding end face of the movable barrel 22, and the plug pin is inserted into the plug hole. During specific arrangement, arrangement may be conducted according to a length relation between the fixed barrel 21 and the movable barrel 22. As shown in Fig. 4, the length of the fixed barrel 21 is greater than that of the movable barrel 22, so a plug hole is formed in the end face of the fixed barrel 21 to guarantee that the plug hole can accommodate a large length of a plug pin, thereby increasing the telescopic range.

It needs to be understood that the fixed barrel 21 needs to be connected to the driving assembly 4, because if the movable barrel 22 is connected with the driving assembly 4, the driving assembly 4 will move along with moving of the movable barrel 22, so that the structural design is more complex.

The specific positions of the circulating pump assemblies 3 are not limited, the circulating pump assemblies may be arranged at any end of each of the corresponding measuring channels 2, but since the measuring channels 2 are to rotate with a rotation driving member 41, line connection of pumps with the outside is a technical problem, which may be solved by pumps with built-in batteries.

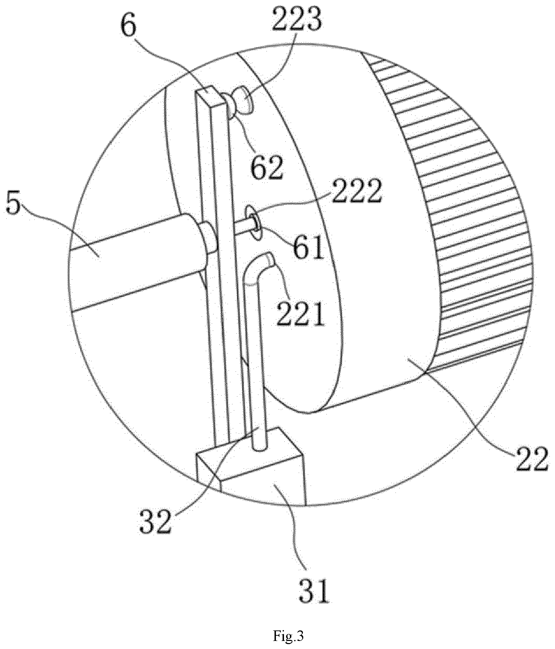

A preferred fixing manner of the circulating pump assemblies 3 is provided herein, as shown in Fig. 1 and Fig. 3:
a plurality of linear driving members 5 are evenly distributed on a wall of the monitoring barrel 11 in the circumferential direction, the linear driving members 5 correspond to the monitoring cavities in a one-to-one manner, a mounting plate 6 is fixed to one end of a movable rod of each of the linear driving members 5, each of the circulating pump assemblies 3 includes a pump body 31 and a water outlet pipe 32, the pump body 31 is fixed to the mounting plate 6 and has a water inlet communicating with the corresponding monitoring cavity, the water outlet pipe 32 communicates with a water outlet of the pump body 31, a first through hole 221 is formed in an end face of the measuring channel 2 close to the wall of the monitoring barrel 11, and the water outlet pipe 32 has a first position where the water outlet pipe is inserted into the first through hole 221 to spray water to the inside of the measuring channel 2 and a second position where the water outlet pipe is separated from the first through hole 221 to avoid a movement path of the measuring channel 2.

The circulating pump assemblies 3 are mounted on the wall of the monitoring barrel 11 through the linear driving members 5, and compared with the solution of directly mounting the circulating pump assemblies 3 on the measuring channels 2, the weight of the measuring channels 2 is lowered, a transmission load of the driving assembly 4 is reduced, and the driving assembly 4 is smoother in operation.

The type of the linear driving members 5 is not limited, and the linear driving members may be cylinders, hydraulic cylinders, linear motors, electric push rods, pneumatic push rods, hydraulic push rods or the like. Each of the linear driving members 5 is composed of the movable rod and a shell. It needs to be noted that if the measuring channels 2 adopt the aforementioned telescopic structures, the linear driving members 5 need to adopt linear push rod structures, such as linear motors, electric push rods, pneumatic push rods or hydraulic push rods, because the length of movable rods of the linear push rods can be fixed to any length, and the circulating pump assemblies 3 can adapt to the measuring channels 2 of different lengths. If the structures such as cylinders are adopted, since the cylinders only have a fixed telescopic amount and cannot stay at any position, the cylinders are not applicable to the aforementioned telescopic structures of the measuring channels 2.

The mounting plates 6 may be located inside the monitoring barrel 11 as shown in Fig. 1 or outside the monitoring barrel 11, as long as the water outlet pipes 32 penetrate through the wall of the monitoring barrel 11 in a sealed manner. The former is preferred, so that the outside structure of the monitoring barrel 11 is simpler, and the entire structural compactness is higher.

Further, as shown in Fig. 3, a fish baiting structure 61 is further fixed to each of the mounting plates 6, the fish baiting structure 61 is disposed on the mounting plate 6 in a protruding manner towards a direction away from the corresponding linear driving member 5, a second through hole 222 is formed in the end face of the measuring channel 2 close to the wall of the monitoring barrel 11, the fish baiting structure 61 has a first position where the fish baiting structure is inserted into the second through hole 222 and a second position where the fish baiting structure is separated from the second through hole 222 to avoid a movement path of the measuring channel 2, and the first position of the fish baiting structure 61 and the first position of the water outlet pipe 32 are synchronously realized by action of the linear driving member 5.

The fish baiting structures 61 can induce fish to swim to the positions of the fish baiting structures, thereby further improving the monitoring efficiency.

Specifically, the fish baiting structures 61 may be ultrasonic generators, light sources, bait or the like.

Further, as shown in Fig. 3, a first magnetic portion 62 is further fixed to each of the mounting plates 6, a second magnetic portion 223 is fixed to the end face of the measuring channel 2 close to the wall of the monitoring barrel 11, the first magnetic portion 62 has a first position where the first magnetic portion is attracted onto the second magnetic portion 223 during monitoring and a second position where the first magnetic portion is separated from the second magnetic portion 223, and the first position of the first magnetic portion 62 and the first position of the water outlet pipe 32 are synchronously realized by action of the linear driving member 5.

The first magnetic portions 62 and the second magnetic portions 223 are attracted during monitoring to make the measuring channels 2 firmer, and interference on monitoring caused by external factors such as shaking of the measuring channels 2 is avoided.

There are three solutions as follows for arrangement of the magnetic portions: first, the first magnetic portions 62 are magnets and the second magnetic portions 223 are magnetic steel; second, the first magnetic portions 62 are magnetic steel and the second magnetic portions 223 are magnets; and third, both the first magnetic portions 62 and the second magnetic portions 223 are magnets and are opposite in polarity at joining surfaces.

The specific structure of the driving assembly 4 is not limited, as long as the driving assembly can complete two motions: first, the measuring channels 2 can be driven to rotate in the circumferential direction of the monitoring barrel 11, and second, the measuring channels 2 can be driven to move up to avoid the path where the partition plates 12 enter the respective adjacent monitoring cavities. For example, the driving assembly 4 may be a combination of one rotation power member and a plurality of lifting power members, the plurality of lifting power members are evenly distributed on a rotating shaft of the rotation power member in a circumferential direction, the lifting power members drive the measuring channels 2 to move up, and the rotation power member drives the measuring channels 2 to rotate in the circumferential direction of the monitoring barrel 11. Specifically, the rotation power member is a motor, a rotating cylinder or the like, and the lifting power members are cylinders, synchronous belt assemblies or the like.

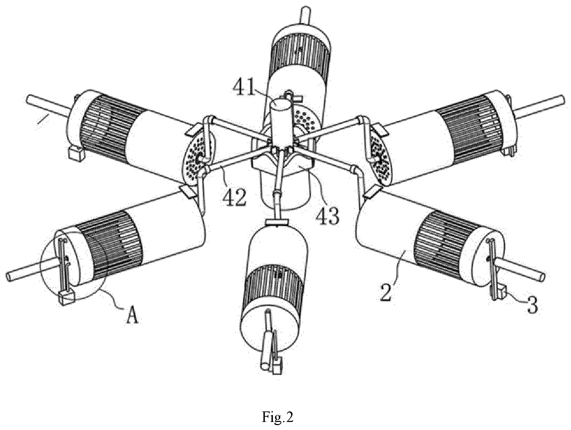

A preferred structure of the driving assembly 4 is provided herein, referring to Fig. 2, including:
a rotation driving member 41, mounted at the center of the monitoring barrel 11, wherein a rotating shaft of the rotation driving member 41 extends out of upper sides of the partition plates 12 and is perpendicular to a bottom of the monitoring barrel 11;
a plurality of connecting rods 42, corresponding to the plurality of measuring channels 2 in a one-to-one manner, wherein one end of each of the connecting rods 42 is fixedly connected to one of the measuring channels 2, and the other end of each of the connecting rods 42 is hinged to the rotating shaft and is able to rotate in a vertical plane; and
a lifting barrel 43, fixed at the center of the monitoring barrel 11 and coaxial with the rotating shaft, wherein an upper end face of the lifting barrel 43 is configured as a wavy curved surface, valleys of the wavy curved surface correspond to the plurality of measuring channels 2 in a one-to-one manner, the connecting rods 42 rest on the wavy curved surface, and the wavy curved surface is configured to guide the measuring channels 2 to move into the respective adjacent monitoring cavities when the rotating shaft rotates.

In the driving assembly 4, the measuring channels 2 are controlled by the rotation driving member 41 to rotate in the circumferential direction of the monitoring barrel 11, the lifting barrel 43 is configured to avoid interference between the measuring channels 2 and the partition plates 12 during movement of the measuring channels, the structure is simple, operation is convenient, and the operation stability of all the measuring channels 2 can be guaranteed.

Specifically, the rotation driving member 41 may be a commonly used power mechanism that can output torque, such as a motor and a rotating cylinder.

Specifically, as shown in Fig. 2, the connecting rods 42 are Z-shaped rods, each Z-shaped rod includes a first rod, a second rod and a third rod perpendicularly connected to one another in sequence, each of the first rods rests on the wavy curved surface and has one end hinged to the rotating shaft, and one end of each of the third rods is fixedly connected to an end face, which is close to the center of the monitoring barrel 11, of one of the measuring channels 2. Of course, the connecting rods 42 may be in a shape of a straight line or an L shape or other shapes, as long as the connecting rods can drive the measuring channels 2 to move.

Further, as shown in Fig. 5, an outlet 212 is formed in a lower portion of one end, which is close to the corresponding connecting rod 42, of each measuring channel 2, the outlet 212 is configured for fish in the measuring channel 2 to swim out, a door body 213 is mounted on the outlet 212, and the door body 213 is provided with drain holes. Specifically, the door bodies 213 may be flip structures or sliding structures shown in Fig. 5.

When the connecting rods 42 are located at peaks of the wavy curved surface, the end, which is close to the corresponding connecting rod 42, of each measuring channel 2 is lower than the other end, water will gather at the end close to the connecting rod 42 and be discharged via the drain holes, at the moment, the door body 213 is opened, then a net bag is placed under the outlet 212, fish will enter the net bag through the outlet 212, and the fish is taken out. The operation is convenient, and the fish taking efficiency is improved.

According to an improved structure of the device for monitoring swimming capability of fish as shown in Fig. 4 and Fig. 5, a fish expelling structure 7 is disposed at one end of each of the measuring channels 2 provided with the water outlet holes 211, the fish expelling structure 7 includes a floating plate 71, a moving rod 72 and a flexible mat 73, an upper edge part of the flexible mat 73 is fixed to an inner wall of the measuring channel 2, the moving rod 72 is slidably inserted into an upper barrel wall of the measuring channel 2, a lower end of the moving rod 72 is fixedly connected to a lower edge part of the flexible mat 73, and an upper end of the moving rod 72 extends out of the measuring channel 2 and is fixedly connected to the floating plate 71. When the measuring channels 2 enter the monitoring cavities, the floating plates 71 are subjected to buoyancy and drive the flexible mats 73 to wrinkle by the moving rods 72, and thus fish is expelled to swim towards the side opposite to the water outlet holes 211, and the monitoring efficiency is further improved.

According to another improved structure of the device for monitoring swimming capability of fish as shown in Fig. 1, the device further includes a plurality of turbulence flow generating mechanisms 8, and the plurality of turbulence flow generating mechanisms 8 correspond to the monitoring cavities in a one-to-one manner and are mounted in the monitoring cavities. The turbulence flow performance, such as turbulence energy and a turbulence dissipation rate, in the corresponding monitoring cavities can be changed by the turbulence flow generating mechanisms 8, and thus the swimming capability of fish under different turbulence flow performance can be monitored.

Based on the above implementations, a using method of the device for monitoring swimming capability of fish according to the present disclosure is as follows:
(1) the length of each of the measuring channels 2 is determined according to fish to be monitored, and the movable barrel 22 is moved to adjust the measuring channel 2 to the target length;
(2) the rotation driving member 41 is controlled to make the connecting rods 42 placed at the peaks of the wavy curved surface so as to place in fish from the outlet 212 of the measuring channel 2;
(3) the rotation driving member 41 is controlled to make the connecting rods 42 placed at the valleys of the wavy curved surface, and each of the measuring channels 2 is placed in the corresponding monitoring cavity;
(4) the linear driving members 5 are controlled to make the second magnetic portions 223 and the first magnetic portions 62 attracted, meanwhile, the water outlet pipes 32 of the circulating pump assemblies 3 are inserted into the first through holes 221 of the measuring channels 2, and the fish baiting structures 61 are inserted into the second through holes 222 of the measuring channels 2;
(5) a water environment condition of each of the monitoring cavities is set through the circulating pump assemblies 3 and the turbulence flow generating mechanisms 8, and parameters such as time and swimming states of fish swimming from the fixed barrel 21 to the movable barrel 22 are observed;
(6) the rotation driving member 41 is controlled to make each of the measuring channels 2 enter the next adjacent monitoring cavity, and parameters such as time and swimming states of fish swimming from the fixed barrel 21 to the movable barrel 22 are observed;
(7) step (6) is repeated to monitor swimming situations of the fish under multiple different environments; and
(8) according to steps (5)-(7), ranges of a water flow rate, turbulence energy, a turbulence dissipation rate, a strain rate and the like preferred by the fish are obtained via analysis, and then a response relationship of the fish for water flow under different water flow conditions is established.

Apparently, the embodiments above are merely examples for clear description, rather than limitation to the implementations. For those of ordinary skill in the art, other changes or modifications of different forms can also be made on the basis of the above description. It is unnecessary and impossible to enumerate all embodiments here. The obvious changes or modifications arising therefrom are still within the protection scope of the present invention defined by the appended claims.

## Claims

1. A device for monitoring swimming capability of fish, comprising:
a monitoring shell (1), comprising a monitoring barrel (11) and a plurality of partition plates (12), wherein an opening of the monitoring barrel (11) is upward, the plurality of partition plates (12) are all located in the monitoring barrel (11) and evenly distributed in a circumferential direction of the monitoring barrel (11), the partition plates (12) are strip-shaped plates, one end of each of the strip-shaped plates is connected to an inner wall of the monitoring barrel (11) in a sealed manner, the other end of each of the strip-shaped plates is connected to one another at a center of the monitoring barrel (11) in a sealed manner, and the plurality of partition plates (12) divide an inner cavity of the monitoring barrel (11) into a plurality of monitoring cavities evenly distributed in the circumferential direction;
a plurality of measuring channels (2), corresponding to the monitoring cavities in a one-to-one manner, wherein the measuring channels (2) are placed in the corresponding monitoring cavities during measuring, one end face of each of the measuring channels (2) is provided with water outlet holes (211), testing spaces suitable for target fish activities are formed in the measuring channels (2), and the measuring channels (2) are of transparent structures or cage structures, so that fish swimming states inside the measuring channels are able to be observed from outside during monitoring;
a plurality of circulating pump assemblies (3), corresponding to the measuring channels (2) in a one-to-one manner and each communicating with the other end face of each of the corresponding measuring channels (2) during measuring, wherein the circulating pump assemblies (3) are configured to form streams in an extending direction of each of the measuring channels (2); and
a driving assembly (4), connected with each measuring channel (2) and configured to move all the measuring channels (2) into respective adjacent monitoring cavities synchronously; wherein
the driving assembly (4) comprises:
a rotation driving member (41), mounted at the center of the monitoring barrel (11), wherein a rotating shaft of the rotation driving member (41) extends out of upper sides of the partition plates (12) and is perpendicular to a bottom of the monitoring barrel (11);
a plurality of connecting rods (42), corresponding to the plurality of measuring channels (2) in a one-to-one manner, wherein one end of each of the connecting rods (42) is fixedly connected to one of the measuring channels (2), and the other end of each of the connecting rods (42) is hinged to the rotating shaft and is able to rotate in a vertical plane; and
a lifting barrel (43), fixed at the center of the monitoring barrel (11) and coaxial with the rotating shaft, wherein an upper end face of the lifting barrel (43) is configured as a wavy curved surface, valleys of the wavy curved surface correspond to the plurality of measuring channels (2) in a one-to-one manner, the connecting rods (42) rest on the wavy curved surface, and the wavy curved surface is configured to guide the measuring channels (2) to move into the respective adjacent monitoring cavities when the rotating shaft rotates.

2. The device for monitoring swimming capability of fish according to claim 1, wherein the connecting rods (42) are Z-shaped rods, each Z-shaped rod comprises a first rod, a second rod and a third rod perpendicularly connected to one another in sequence, each of the first rods rests on the wavy curved surface and has one end hinged to the rotating shaft, and one end of each of the third rods is fixedly connected to an end face, which is close to the center of the monitoring barrel (11), of one of the measuring channels (2).

3. The device for monitoring swimming capability of fish according to claim 1, wherein an outlet (212) is formed in a lower portion of one end, which is close to the corresponding connecting rod (42), of each measuring channel (2), the outlet (212) is configured for fish in the measuring channel (2) to swim out, a door body (213) is mounted on the outlet (212), and the door body (213) is provided with drain holes.

4. The device for monitoring swimming capability of fish according to claim 1, wherein each of the measuring channels (2) comprises:
a fixed barrel (21), with one end fixedly connected to the driving assembly (4); and
a movable barrel (22), disposed coaxially with the fixed barrel (21) and having one end telescopically connected to the other end of the fixed barrel (21) by plug pin structures, wherein the plug pin structures comprise a plurality of groups evenly distributed in a circumferential direction of the movable barrel (22), and each interval between adjacent groups of plug pin structures is able to block fish from swimming out of the measuring channel (2).

5. The device for monitoring swimming capability of fish according to claim 1, wherein a plurality of linear driving members (5) are evenly distributed on a wall of the monitoring barrel (11) in the circumferential direction, the linear driving members (5) correspond to the monitoring cavities in a one-to-one manner, a mounting plate (6) is fixed to one end of a movable rod of each of the linear driving members (5), each of the circulating pump assemblies (3) comprises a pump body (31) and a water outlet pipe (32), the pump body (31) is fixed to the mounting plate (6) and has a water inlet communicating with the corresponding monitoring cavity, the water outlet pipe (32) communicates with a water outlet of the pump body (31), a first through hole (221) is formed in an end face of the measuring channel (2) close to the wall of the monitoring barrel (11), and the water outlet pipe (32) has a first position where the water outlet pipe is inserted into the first through hole (221) to spray water to the inside of the measuring channel (2) and a second position where the water outlet pipe is separated from the first through hole (221) to avoid a movement path of the measuring channel (2).

6. The device for monitoring swimming capability of fish according to claim 5, wherein a fish baiting structure (61) is further fixed to each of the mounting plates (6), the fish baiting structure (61) is disposed on the mounting plate (6) in a protruding manner towards a direction away from the corresponding linear driving member (5), a second through hole (222) is formed in the end face of the measuring channel (2) close to the wall of the monitoring barrel (11), the fish baiting structure (61) has a first position where the fish baiting structure is inserted into the second through hole (222) and a second position where the fish baiting structure is separated from the second through hole (222) to avoid a movement path of the measuring channel (2), and the first position of the fish baiting structure (61) and the first position of the water outlet pipe (32) are synchronously realized by action of the linear driving member (5).

7. The device for monitoring swimming capability of fish according to claim 5, wherein a first magnetic portion (62) is further fixed to each of the mounting plates (6), a second magnetic portion (223) is fixed to the end face of the measuring channel (2) close to the wall of the monitoring barrel (11), the first magnetic portion (62) has a first position where the first magnetic portion is attracted onto the second magnetic portion (223) during monitoring and a second position where the first magnetic portion is separated from the second magnetic portion (223), and the first position of the first magnetic portion (62) and the first position of the water outlet pipe (32) are synchronously realized by action of the linear driving member (5).

8. The device for monitoring swimming capability of fish according to claim 1, wherein a fish expelling structure (7) is disposed at one end of the measuring channel (2) provided with the water outlet holes (211), the fish expelling structure (7) comprises a floating plate (71), a moving rod (72) and a flexible mat (73), an upper edge part of the flexible mat (73) is fixed to an inner wall of the measuring channel (2), the moving rod (72) is slidably inserted into an upper barrel wall of the measuring channel (2), a lower end of the moving rods (72) is fixedly connected to a lower edge part of the flexible mat (73), and an upper end of the moving rod (72) extends out of the measuring channel (2) and is fixedly connected to the floating plate (71).

9. The device for monitoring swimming capability of fish according to any one of claims 1-8, further comprising:
a plurality of turbulence flow generating mechanisms (8), corresponding to the monitoring cavities in a one-to-one manner and mounted in the monitoring cavities.

## Patentansprüche

1. Vorrichtung zum Überwachen der Schwimmfähigkeit von Fischen, umfassend:
ein Überwachungsgehäuse (1), das ein Überwachungsfass (11) und eine Mehrzahl von Trennplatten (12) umfasst, wobei eine Öffnung des Überwachungsfasses (11) nach oben gerichtet ist, sich die Mehrzahl der Trennplatten (12) alle in dem Überwachungsfass (11) befinden und gleichmäßig in einer Umfangsrichtung des Überwachungsfasses (11) verteilt sind, die Trennplatten (12) streifenförmige Platten sind, ein Ende jeder der streifenförmigen Platten mit einer Innenwand des Überwachungsfasses (11) auf abgedichtete Weise verbunden ist, das andere Ende jeder der streifenförmigen Platten miteinander in einer Mitte des Überwachungsfasses (11) auf eine abgedichtete Weise verbunden ist, und die Mehrzahl der Trennplatten (12) einen inneren Hohlraum des Überwachungsfasses (11) in eine Mehrzahl von Überwachungshohlräumen unterteilen, die gleichmäßig in der Umfangsrichtung verteilt sind,
eine Mehrzahl von Messkanälen (2), die eins-zu-eins den Überwachungshohlräumen entsprechen, wobei die Messkanäle (2) in den entsprechenden Überwachungshohlräumen während eines Messens platziert werden, eine Endfläche jedes der Messkanäle (2) mit Wasserauslasslöchern (211) versehen ist, in den Messkanälen (2) für Zielfischaktivitäten geeignete Prüfräume ausgebildet sind und die Messkanäle (2) aus transparenten Strukturen oder Käfigstrukturen bestehen, sodass Schwimmzustände von Fischen innerhalb der Messkanäle während des Überwachens von außen beobachtet werden können,
eine Mehrzahl von Umwälzpumpenbaugruppen (3), die eins-zu-eins den Messkanälen (2) entsprechen und jeweils mit der anderen Endfläche jedes der entsprechenden Messkanäle (2) während des Messens kommunizieren, wobei die Umwälzpumpenbaugruppen (3) dazu konfiguriert sind, Ströme in einer Erstreckungsrichtung jedes der Messkanäle (2) auszubilden; und
eine Antriebsbaugruppe (4), die mit jedem Messkanal (2) verbunden und dazu konfiguriert ist, alle Messkanäle (2) synchron in jeweilige benachbarte Überwachungshohlräume zu bewegen, wobei
die Antriebsbaugruppe (4) umfasst:
ein Drehantriebselement (41), das in der Mitte des Überwachungsfasses (11) montiert ist, wobei sich eine Drehwelle des Drehantriebselements (41) aus den Oberseiten der Trennplatten (12) heraus erstreckt und senkrecht zu einem Boden des Überwachungsfasses (11) ist,
eine Mehrzahl von Verbindungsstangen (42), die eins-zu-eins der Mehrzahl von Messkanälen (2) entsprechen, wobei ein Ende jeder der Verbindungsstangen (42) fest mit einem der Messkanäle (2) verbunden ist, und das andere Ende jeder der Verbindungsstangen (42) mit der Drehwelle gelenkig verbunden ist und sich in einer vertikalen Ebene drehen kann; und
ein Hebefass (43), das in der Mitte des Überwachungsfasses (11) befestigt und koaxial mit der Drehwelle ist, wobei eine obere Endfläche des Hebefasses (43) als eine wellenförmig gekrümmte Oberfläche konfiguriert ist, die Täler der wellenförmigen gekrümmten Oberfläche eins-zu-eins der Mehrzahl von Messkanälen (2) entsprechen, die Verbindungsstangen (42) auf der wellenförmigen gekrümmten Oberfläche aufliegen und die wellenförmige gekrümmte Oberfläche dazu konfiguriert ist, die Messkanäle (2) zu führen, um sich in die jeweiligen benachbarten Überwachungshohlräume zu bewegen, wenn sich die Drehwelle dreht.

2. Vorrichtung zum Überwachen der Schwimmfähigkeit von Fischen nach Anspruch 1, wobei die Verbindungsstangen (42) Z-förmige Stangen sind, wobei jede Z-förmige Stange eine erste Stange, eine zweite Stange und eine dritte Stange umfasst, die nacheinander senkrecht miteinander verbunden sind, wobei jede der ersten Stangen auf der wellenförmigen gekrümmten Oberfläche aufliegt und mit einem Ende mit der Drehwelle gelenkig verbunden ist, und ein Ende jeder der dritten Stangen fest mit einer Endfläche verbunden ist, die sich in der Nähe der Mitte des Überwachungsfasses (11) eines der Messkanäle (2) befindet.

3. Vorrichtung zum Überwachen der Schwimmfähigkeit von Fischen nach Anspruch 1, wobei ein Auslass (212) in einem unteren Abschnitt eines Endes ausgebildet ist, der sich in der Nähe der entsprechenden Verbindungsstange (42) jedes Messkanals (2) befindet, wobei der Auslass (212) dazu konfiguriert ist, dass Fische in dem Messkanal (2) herausschwimmen können, ein Türkörper (213) an dem Auslass (212) montiert ist und der Türkörper (213) mit Abflusslöchern versehen ist.

4. Vorrichtung zum Überwachen der Schwimmfähigkeit von Fischen nach Anspruch 1, wobei jeder der Messkanäle (2) umfasst:
ein festes Fass (21), wobei ein Ende fest mit der Antriebsbaugruppe (4) verbunden ist, und
ein bewegliches Fass (22), das koaxial zu dem festen Fass (21) angeordnet ist und ein Ende teleskopisch mit dem anderen Ende des festen Fasses (21) durch Steckstiftstrukturen verbunden aufweist, wobei die Steckstiftstrukturen eine Mehrzahl von Gruppen umfassen, die gleichmäßig in einer Umfangsrichtung des beweglichen Fasses (22) verteilt sind, und jeder Abstand zwischen benachbarten Gruppen von Steckstiftstrukturen in der Lage ist, Fische an dem Herausschwimmen aus dem Messkanal (2) zu hindern.

5. Vorrichtung zum Überwachen der Schwimmfähigkeit von Fischen nach Anspruch 1, wobei eine Mehrzahl von linearen Antriebselementen (5) gleichmäßig an einer Wand des Überwachungsfasses (11) in der Umfangsrichtung verteilt sind, wobei die linearen Antriebselemente (5) eins-zu-eins den Überwachungshohlräumen entsprechen, eine Montageplatte (6) an einem Ende einer beweglichen Stange jedes der linearen Antriebselemente (5) befestigt ist, jede der Umwälzpumpenbaugruppen (3) einen Pumpenkörper (31) und ein Wasserauslassrohr (32) umfasst, wobei der Pumpenkörper (31) an der Montageplatte (6) befestigt ist und einen Wassereinlass aufweist, der mit dem entsprechenden Überwachungshohlraum kommuniziert, wobei das Wasserauslassrohr (32) mit einem Wasserauslass des Pumpenkörpers (31) kommuniziert, ein erstes Durchgangsloch (221) in einer Endfläche des Messkanals (2) in der Nähe der Wand des Überwachungsfasses (11) ausgebildet ist, und das Wasserauslassrohr (32) eine erste Position, in der das Wasserauslassrohr in das erste Durchgangsloch (221) eingesetzt wird, um Wasser in das Innere des Messkanals (2) zu sprühen, und eine zweite Position aufweist, in der das Wasserauslassrohr von dem ersten Durchgangsloch (221) getrennt ist, um einen Bewegungsweg des Messkanals (2) zu vermeiden.

6. Vorrichtung zum Überwachen der Schwimmfähigkeit von Fischen nach Anspruch 5, wobei eine Fischköderstruktur (61) ferner an jeder der Montageplatten (6) befestigt ist, wobei die Fischköderstruktur (61) auf der Montageplatte (6) auf eine vorstehende Weise zu einer Richtung hin weg von dem entsprechenden linearen Antriebselement (5) angeordnet ist, ein zweites Durchgangsloch (222) in der Endfläche des Messkanals (2) in der Nähe der Wand des Überwachungsfasses (11) ausgebildet ist, wobei die Fischköderstruktur (61) eine erste Position, in der die Fischköderstruktur in das zweite Durchgangsloch (222) eingesetzt ist, und eine zweiten Position aufweist, in der die Fischköderstruktur von dem zweiten Durchgangsloch (222) getrennt ist, um einen Bewegungspfad des Messkanals (2) zu vermeiden, und die erste Position der Fischköderstruktur (61) und die erste Position des Wasserauslassrohrs (32) synchron durch die Wirkung des linearen Antriebselements (5) realisiert werden.

7. Vorrichtung zum Überwachen der Schwimmfähigkeit von Fischen Anspruch 5, wobei ein erster magnetischer Abschnitt (62) ferner an jeder der Montageplatten (6) befestigt ist, ein zweiter magnetischer Abschnitt (223) an der Endfläche des Messkanals (2) in der Nähe der Wand des Überwachungsfasses (11) befestigt, der erste magnetische Abschnitt (62) eine erste Position, in der der erste magnetische Abschnitt während der Überwachung an den zweiten magnetischen Abschnitt (223) angezogen wird, und eine zweite Position aufweist, in der der erste magnetische Abschnitt von dem zweiten magnetischen Abschnitt (223) getrennt ist, und die erste Position des ersten magnetischen Abschnitts (62) und die erste Position des Wasserauslassrohrs (32) synchron durch die Wirkung des linearen Antriebselements (5) realisiert werden.

8. Vorrichtung zum Überwachen der Schwimmfähigkeit von Fischen nach Anspruch 1, wobei eine Fischaustreibungsstruktur (7) an einem Ende des mit Wasserauslasslöchern (211) versehenen Messkanals (2) angeordnet ist, wobei die Fischaustreibungsstruktur (7) eine schwimmende Platte (71), eine bewegliche Stange (72) und eine flexible Matte (73) umfasst, wobei ein oberer Randteil der flexiblen Matte (73) an einer Innenwand des Messkanals (2) befestigt ist, die bewegliche Stange (72) gleitend in eine obere Fasswand des Messkanals (2) eingesetzt ist, ein unteres Ende der beweglichen Stange (72) fest mit einem unteren Randteil der flexiblen Matte (73) verbunden ist, und sich ein oberes Ende der beweglichen Stange (72) aus dem Messkanal (2) heraus erstreckt und fest mit der schwimmenden Platte (71) verbunden ist.

9. Vorrichtung zum Überwachen der Schwimmfähigkeit von Fischen nach einem der Ansprüche 1-8, ferner umfassend:
eine Mehrzahl von Mechanismen für die Erzeugung von Turbulenzströmungen (8), die eins-zu-eins den Überwachungshohlräumen entsprechen und in den Überwachungshohlräumen montiert sind.

## Revendications

1. Dispositif pour surveiller la capacité de nage d'un poisson comprenant :
une coque de surveillance (1), comprenant un cylindre de surveillance (11) et une pluralité de plaques de séparation (12), dans lequel une ouverture du cylindre de surveillance (11) est vers le haut, la pluralité de plaques de séparation (12) étant toutes situées dans la coque de surveillance (11) et réparties uniformément dans une direction circonférentielle de la coque de surveillance (11), les plaques de séparation (12) sont des plaques en forme de bande, une extrémité de chacune des plaques en forme de bande est reliée à une paroi intérieure de la coque de surveillance (11) de manière étanche, l'autre extrémité de chacune des plaques en forme de bande est reliée l'une à l'autre au niveau d'un centre de la coque de surveillance (11) de manière étanche, et la pluralité de plaques de séparation (12) divisent une cavité interne de la coque de surveillance (11) en une pluralité de cavités de surveillance uniformément réparties dans la direction circonférentielle ;
une pluralité de canaux de mesure (2), correspondant aux cavités de surveillance de manière biunivoque, les canaux de mesure (2) étant placés dans les cavités de surveillance correspondantes pendant la mesure, une face frontale de chacun des canaux de mesure (2) est pourvu de trous de sortie d'eau (211), des espaces de test adaptés aux activités des poissons cibles sont formés dans les canaux de mesure (2), et les canaux de mesure (2) sont constitués de structures transparentes ou de structures de cage, de sorte que les poissons nageant à l'intérieur les canaux de mesure peuvent être observés de l'extérieur pendant la surveillance ;
une pluralité d'ensembles pompes de circulation (3), correspondant aux canaux de mesure (2) de manière biunivoque et communiquant chacun avec l'autre face d'extrémité de chacun des canaux de mesure (2) correspondants pendant la mesure, dans lequel les ensembles pompe de circulation (3) sont configurés pour former des flux dans une direction d'extension de chacun des canaux de mesure (2) ; et
un ensemble d'entraînement (4), connecté à chaque canal de mesure (2) et configuré pour déplacer de manière synchrone tous les canaux de mesure (2) dans des cavités de surveillance adjacentes respectives ;
dans lequel l'ensemble d'entraînement (4) comprend :
un élément d'entraînement en rotation (41), monté au centre de la coque de surveillance (11), dans lequel un arbre rotatif de l'élément d'entraînement en rotation (41) s'étend hors des côtés supérieurs des plaques de séparation (12) et est perpendiculaire à un fond de la coque de surveillance (11) ;
une pluralité de bielles (42), correspondant à la pluralité de canaux de mesure (2) de manière biunivoque, une extrémité de chacune des bielles (42) étant reliée de manière fixe à l'un des canaux de mesure (2), et l'autre extrémité de chacune des bielles (42) est articulée sur l'arbre rotatif et est capable de tourner dans un plan vertical ; et
une coque de levage (43), fixée au centre de la coque de surveillance (11) et coaxiale à l'arbre rotatif, une face d'extrémité supérieure de la coque de levage (43) étant configurée sous la forme d'une surface incurvée ondulée, des vallées de la surface incurvée ondulée correspond à la pluralité de canaux de mesure (2) de manière biunivoque, les bielles (42) reposent sur la surface incurvée ondulée, et la surface incurvée ondulée est configurée pour guider les canaux de mesure (2) pour se déplacer dans les cavités de surveillance adjacentes respectives lorsque l'arbre rotatif tourne.

2. Dispositif pour surveiller la capacité de nage d'un poisson selon la revendication 1, dans lequel les bielles (42) sont des tiges en forme de Z, chaque tige en forme de Z comprend une première tige, une deuxième tige et une troisième tige reliées perpendiculairement l'une à l'autre en séquence, chacune des premières tiges repose sur la surface incurvée ondulée et possède une extrémité articulée sur l'arbre rotatif, et une extrémité de chacune des troisièmes tiges est reliée de manière fixe à une face d'extrémité, qui est proche du centre de la coque de surveillance (11), d'un des canaux de mesure (2).

3. Dispositif pour surveiller la capacité de nage d'un poisson selon la revendication 1, dans lequel une sortie (212) est formée dans une partie inférieure d'une extrémité, qui est proche de la bielle (42) correspondante, de chaque canal de mesure (2), la sortie (212) est configurée pour que les poissons dans le canal de mesure (2) puissent nager, un corps de porte (213) est monté sur la sortie (212), et le corps de porte (213) est pourvu de trous de drainage.

4. Dispositif pour surveiller la capacité de nage d'un poisson selon la revendication 1, dans lequel les canaux de mesure (2) comprennent :
une coque fixe (21), dont une extrémité est reliée de manière fixe à l'ensemble d'entraînement (4) ; et
une coque mobile (22), disposé coaxialement à la coque fixe (21) et ayant une extrémité reliée télescopiquement à l'autre extrémité de la coque fixe (21) par des structures de broches enfichables, les structures de broches enfichables comprenant une pluralité de groupes répartis uniformément dans une direction circonférentielle de la coque mobile (22), et chaque intervalle entre des groupes adjacents de structures de broches est capable d'empêcher les poissons de nager hors du canal de mesure (2).

5. Dispositif pour surveiller la capacité de nage d'un poisson selon la revendication 1, dans lequel une pluralité d'éléments d'entraînement linéaires (5) sont répartis uniformément sur une paroi de la coque de surveillance (11) dans la direction circonférentielle, les éléments d'entraînement linéaires (5) correspondent aux cavités de surveillance de manière biunivoque, une plaque de montage (6) est fixée à une extrémité d'une tige mobile de chacun des éléments d'entraînement linéaires (5), chacun des ensembles pompes de circulation (3) comprend un corps de pompe (31) et un tuyau de sortie d'eau (32), le corps de pompe (31) est fixé à la plaque de montage (6) et présente une entrée d'eau communiquant avec la cavité de surveillance correspondante, le tuyau de sortie d'eau (32) communique avec un sortie d'eau du corps de pompe (31), un premier trou traversant (221) est formé dans une face d'extrémité du canal de mesure (2) à proximité de la paroi de la coque de surveillance (11), et le tuyau de sortie d'eau (32) présente une première position dans laquelle le tuyau de sortie d'eau est inséré dans le premier trou traversant (221) pour pulvériser l'eau vers l'intérieur du canal de mesure (2) et une seconde position dans laquelle le tuyau de sortie d'eau est séparé du premier trou traversant (221) pour éviter une trajectoire de déplacement du canal de mesure (2).

6. Dispositif pour surveiller la capacité de nage d'un poisson selon la revendication 5, dans lequel une structure d'appâtage pour poisson (61) est en outre fixée à chacune des plaques de montage (6), la structure d'appâtage pour poisson (61) est disposée sur la plaque de montage (6). de manière saillante vers une direction opposée à l'élément d'entraînement linéaire correspondant (5), un deuxième trou traversant (222) est formé dans la face d'extrémité du canal de mesure (2) à proximité de la paroi de la coque de surveillance (11), la structure d'appâtage pour poissons (61) a une première position dans laquelle la structure d'appâtage pour poissons est insérée dans le deuxième trou traversant (222) et une seconde position dans laquelle la structure d'appâtage pour poissons est séparée du deuxième trou traversant (222) pour éviter une trajectoire de déplacement du canal de mesure (2), et la première position de la structure d'appâtage pour poissons (61) et la première position du tuyau de sortie d'eau (32) sont réalisées de manière synchrone par l'action de l'élément d'entraînement linéaire (5).

7. Dispositif pour surveiller la capacité de nage d'un poisson selon la revendication 5, dans lequel une première partie magnétique (62) est en outre fixée à chacune des plaques de montage (6), une seconde partie magnétique (223) est fixée à la face d'extrémité du canal de mesure (2) proche de la paroi de la coque de surveillance (11), la première partie magnétique (62) a une première position où la première partie magnétique est attirée sur la deuxième partie magnétique (223) pendant la surveillance et une deuxième position où la première partie magnétique est séparée de la deuxième partie magnétique (223), et la première position de la première partie magnétique (62) et la première position du tuyau de sortie d'eau (32) sont réalisées de manière synchrone par l'action de l'élément d'entraînement linéaire (5).

8. Dispositif pour surveiller la capacité de nage d'un poisson selon la revendication 1, dans lequel une structure d'expulsion des poissons (7) est disposée à une extrémité du canal de mesure (2) pourvu des trous de sortie d'eau (211), la structure d'expulsion des poissons (7) comprend une plaque flottante (71), une tige mobile (72) et un tapis flexible (73), une partie de bord supérieure du tapis flexible (73) est fixée à une paroi interne du canal de mesure (2), la tige mobile (72) est inséré de manière coulissante dans une paroi de cylindre supérieure du canal de mesure (2), une extrémité inférieure des tiges mobiles (72) est reliée de manière fixe à une partie de bord inférieure du tapis flexible (73), et une extrémité supérieure de la tige mobile (72) s'étend hors du canal de mesure (2) et est reliée de manière fixe à la plaque flottante (71).

9. Dispositif pour surveiller la capacité de nage d'un poisson selon l'une quelconque des revendications 1 à 8, comprenant en outre :
une pluralité de mécanismes de génération d'écoulement de turbulence (8), correspondant aux cavités de surveillance de manière biunivoque et montés dans les cavités de surveillance.
